# EUROPEAN PATENT SPECIFICATION

(11) **EP 1 078 934 B1**
(45) Date of publication and mention of the grant of the patent: **24.11.2004**
(21) Application number: 00306949.9
(22) Date of filing: 14.08.2000
(51) Int. Cl.: C08F 2/00, B08B 3/08, B08B 9/08, C11D 7/00

(54) **Process for cleaning reactors**
Verfahren zur Reinigung von Reaktoren
Procédé pour le nettoyage des réacteurs

(30) Priority: 27.08.1999 US 150989 P
(43) Date of publication of application: 28.02.2001
(60) Divisional application: 04254140.9
(73) Proprietor: ROHM AND HAAS COMPANY, Philadelphia, Pennsylvania 19106-2399 (US)
(72) Inventor: Bruce, Spencer Wayne, Algonquin, Illinois 60102 (US); Carpenter, James Kent, Lambertville, New Jersey 08530 (US); Hurry, Jeanine Lee, North Wales, Pennsylvania 19454 (US); Povernick, Joseph Richard, Philadelphia, Pennsylvania 19154 (US); Robertson, Frank Randolph III, Pearland, Texas 77584 (US); Schwartz, Robert Hugh, Parkland, Pennsylvania 19047 (US); Wu, Richard Shu-Hua, Ft. Washington, Pennsylvania 19034 (US)
(74) Representative: Kent, Venetia Katherine

(56) References cited:
- DE-A- 3 325 166
- FR-A- 2 189 425
- GB-A- 1 519 359
- US-A- 5 782 989

## Description

This invention relates to a process for cleaning reactors. In particular, the invention relates to a process which utilizes a solvent fed from multiple pressure sources to clean reactors of residual polymers. The process may also utilize heated aqueous base to clean heat exchangers in external loops. In one aspect, a mixture of at least one organic solvent and aqueous base are utilized to clean reactors.

Polymers may be made by various processes, which include solution, bulk, and emulsion polymerization. The process may be a batch process in which all materials to be reacted are premixed and fed to a reactor where they are polymerized. Alternatively, the process may be a continuous process where the materials to be polymerized are continuously fed to a reactor while polymer is continuously removed from the reactor.

Polymerizations tend to be exothermic reactions. In order for the polymerization to be controlled properly and safely, the reactors are generally cooled. Frequently, the polymer is cooled through passing a coolant such as water or brine through a jacketed reactor. Some reactors utilize external heat exchangers in an external loop (a pipe which removes the polymer from the reactor, carries the polymer to the heat exchanger, and returns the cooled polymer to the reactor) to aid in cooling the polymer.

Regardless of the process utilized to polymerize and control temperature, most polymerizations result in the build up of residual polymer inside the reactor and pipes to and from the reactor.

One reactor generally will be utilized to make more than one type of polymer. Therefore, reactors are typically cleaned either after each batch of polymer made, or when residual polymer builds up to an unacceptable level. The amount of time it takes to clean a reactor is important because no products can be made in the reactor during cleaning. Therefore, there is a need for a process for cleaning reactors, wherein the amount of time it takes to clean the reactor is reduced.

An approach to cleaning monomer distillation columns was taught in U.S. Patent No. 5,728,272. The process disclosed in that patent requires flushing the column intermittently with either aqueous or organic basic solutions. The process prevents excessive build up of polymer in the distillation column, and therefore reduces column cleaning time.

European Patent No. EP 248,681 disclosed a process for cleaning reactors which were used in polymerizations. The process required the use of a soap builder, an alkali agent, a surfactant, and a solvent or monomer. The materials were mixed together in the reactor and stirred to clean the reactor.

French Patent No. 2,189,425 also disclosed a process for cleaning reactors which were used in polymerizations. The process utilized a caustic spray, which was followed by a high pressure water spray.

Despite the disclosure of the references, there is a continuing need for a process for cleaning reactors, wherein the amount of time it takes to clean the reactor is reduced.

The invention is as set out in the accompanying claims.

Suitable organic solvents include, but are not limited to isopropanol, n-propanol, acetone, methanol, ethanol, and 1-methyl 2-pyrrolidinone. Isopropanol and acetone are preferred.

After the reactor has been cleaned by feeding the solution to it, the reactor may be emptied. If necessary, the reactor may be rinsed with water to remove residual cleaning solutions. If necessary, the rinse water may be a neutralized solution, such as a mixture of carbon dioxide and water to aid in neutralizing any residual caustic.

As used herein, by aqueous base is meant caustic, ammonium hydroxide, potassium hydroxide and the like.

In this invention, the reactor is cleaned by feeding a solution which is a combination of an aqueous base and an organic solvent to the reactor and emptying the reactor. In this embodiment of the invention, the reactor is selected from a plate-fin, plate-frame, and spiral-plate heat exchanger. A plate-frame heat exchanger is more preferred.

In this embodiment, sodium hydroxide or potassium hydroxide is the preferred aqueous base. Potassium hydroxide is more preferred. Suitable organic solvents include, but are not limited to isopropanol, n-propanol, methanol, ethanol, n-butanol, t-butanol, and 1-methyl 2-pyrrolidinone. When a single organic solvent is desired as the solution, acetone is preferred. Where a combination of aqueous base and organic solvent are utilized, isopropanol is the preferred organic solvent and the amount of aqueous base in the solution generally ranges from 15 weight percent to 30 weight percent, based on the total weight of the solution. The amount of organic solvent in the solution generally ranges from 40 weight percent to 60 weight percent, based on the total weight of the solution. The remainder of the solution may be water and impurities.

The temperature at which the solution is fed through the reactor depends on the solution being fed to the reactor. For the combination of aqueous base and organic solvent, the temperature at which it is fed to the reactor typically ranges from 90°C to 150°C.

After the reactor has been cleaned with the solution, the reactor may be emptied and rinsed with water to remove residual cleaning solutions.

Throughout this specification and claims, unless otherwise indicated, references to percentages are by weight percent and all temperatures are in degree centigrade.

It is also to be understood that for purposes of this specification and claims that the range and ratio limits, recited herein, are combinable. For example, if ranges of 1-20 and 5-15 are recited for a particular parameter, it is understood that ranges of 1-15 or 5-20 are also contemplated.

The following examples are intended to illustrate the process of the invention. The examples should not be construed as limiting the scope of the invention.

### Example 1 - Plate-Frame Reactor Cleaning

A butyl acrylate/methyl methacrylate polymer ("latex"), AC-630, was prepared in a plate and frame heat exchanger reactor. The polymerization was run for three hours under conditions to accelerate fouling. The feed to the reactor consisted of monomer emulsion, water, catalyst and activator at a rate of 25 ml/min. The reactor was a 1 channel x 5 pass with a total volume of 125 ml or 25 ml per channel. The reactor was cleaned online with two different solutions:

### Solution 1

After the polymerization was completed, the reactor was flushed with soapy water to remove any remaining monomer emulsion. A 21% KOH, 25.5% Water, 53.5% IPOH solution was heated and maintained at 70°C and pumped into the reactor at a rate of 100 - 300 g/min. The first 10 minutes of flushing with the cleaning solution was collected, totaling about 1000 - 1500 grams. The cleaning solution was recirculated in the reactor, changing directions from forward to backward every other hour, for four hours. The reactor sat overnight with the cleaning solution in it. The next day it was opened up and the plates were found to be perfectly clean.

### Solution 2

After the polymerization was completed, the reactor was flushed with soapy water to remove any remaining monomer emulsion. Acetone was heated and maintained at 35°C and pumped into the reactor at a rate of 150 - 300 g/min. The first 10 minutes of flushing with the cleaning solution was collected, totaling about 1000 - 1500 grams. The cleaning solution was recirculated in the reactor for two hours. After two hours the reactor was flushed with deionized water and opened up. The reactor was almost clean. There were nine very small pieces (< 4 mm in diameter) of polymer in the unit. This is clean enough to avoid opening the reactor after each run.

## Claims

1. A process for cleaning a reactor comprising:
feeding a solution to the reactor;
and emptying the reactor; wherein, the reactor is selected from the group consisting of a plate-frame heat exchanger, a plate-fin heat exchanger, and a spiral-plate heat exchanger wherein, the solution is a combination of an aqueous base and an organic solvent and comprises from 15 weight percent to 30 weight percent aqueous base and from 40 weight percent to 60 weight percent organic solvent, based on the total weight of the solution, and the remainder water.

2. The process according to claim 1 wherein, the organic solvent is isopropanol.

3. The process according to claim 1 wherein, the solution is acetone.

## Patentansprüche

1. Verfahren zum Reinigen eines Reaktors, umfassend
das Zuführen einer Lösung in den Reaktor und
das Entleeren des Reaktors, wobei der Reaktor ausgewählt ist aus der Gruppe, bestehend aus einem mit Rahmen versehenen Plattenwärmenaustauscher, einem mit Rippen versehenen Plattenwärmenaustauscher und einem mit Spiralen versehenen Wärmeaustauscher, wobei die Lösung eine Kombination einer wäßrigen Base und eines organischen Lösungsmittels ist und von 15 Gew.-% bis 30 Gew.-% wäßrige Base und von 40 Gew.-% bis 60 Gew.-% organisches Lösungsmittel, bezogen auf das Gesamtgewicht der Lösung, und der Rest Wasser ist.

2. Verfahren nach Anspruch 1, wobei das organische Lösungsmittel Isopropanol ist.

3. Verfahren nach Anspruch 1, wobei die Lösung Aceton ist.

## Revendications

1. Procédé de nettoyage d'un réacteur, consistant à :
introduire une solution dans le réacteur ;
et vider le réacteur ; le réacteur étant choisi dans le groupe constitué par un échangeur de chaleur à plaque-trame, un échangeur de chaleur à plaque-ailette et un échangeur de chaleur à spirale-plaque, dans lequel la solution est une combinaison d'une base aqueuse et d'un solvant organique et comprend 15 pour cent en poids à 30 pour cent en poids de base aqueuse et 40 pour cent en poids à 60 pour cent en poids de solvant organique, sur la base du poids total de la solution, le reste étant constitué d'eau.

2. Procédé selon la revendication 1, dans lequel le solvant organique est l'isopropanol.

3. Procédé selon la revendication 1, dans lequel la solution est constituée d'acétone.
